(19) Europäisches Patentamt
European Patent Office
Office européen des brevets

(11) **EP 1 211 774 B1**

(12) **EUROPÄISCHE PATENTSCHRIFT**

(45) Veröffentlichungstag und Bekanntmachung des Hinweises auf die Patenterteilung:
**28.07.2010   Patentblatt 2010/30**

(51) Int Cl.:
*H02H 7/093* *(2006.01)*       *H02H 3/05* *(2006.01)*

(21) Anmeldenummer: **01127331.5**

(22) Anmeldetag: **16.11.2001**

(54) **Sichere Geschwindigkeitsüberwachung für geberlose Drehstromantriebe**

Inherent safe speed monitoring for sensorless three phase current drives

Surveillance de vitesse à sécurité intrinsèque pour entraînements à courant triphase sans capteur

(84) Benannte Vertragsstaaten:
**DE FR GB**

(30) Priorität: **29.11.2000   DE 10059172**

(43) Veröffentlichungstag der Anmeldung:
**05.06.2002   Patentblatt 2002/23**

(73) Patentinhaber: **SIEMENS AKTIENGESELLSCHAFT**
**80333 München (DE)**

(72) Erfinder: **Schwesig, Guenter**
**91054 Erlangen (DE)**

(56) Entgegenhaltungen:
**DE-A- 4 322 146     DE-A- 4 330 823**
**US-A- 4 426 611     US-A- 5 689 170**

• **PATENT ABSTRACTS OF JAPAN vol. 9, no. 118 (E-316), 23. Mai 1985 (1985-05-23) & JP 60 005797 A (YASKAWA ELECTRIC MFG CO LTD), 12. Januar 1985 (1985-01-12)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Antriebssteuerung zur Lage-/ Positions- und Drehzahlerfassung für einen Drehstrommotor ohne integriertes Gebersystem über einen Wechselrichter, insbesondere mit Stromventilen in Brückenschaltung.

Beim Einsatz von elektrischen Antrieben in der industriellen Automatisierungstechnik, z.B. bei numerisch gesteuerten Werkzeugmaschinen und Robotern, wird ein möglichst hoher Schutz von Mensch und Maschine angestrebt. Mit einer Funktion "Sichere Geschwindigkeit" für den Motor soll gewährleistet werden, dass auch im Ein-Fehler-Fall die elektrische Maschine bzw. der Motor kontrollierbar bleibt, so dass dieser möglichst keine gefahrbringenden Bewegungen ausführen kann.

Entsprechende Sicherheitsfunktionen werden bisher hauptsächlich im Werkzeugmaschinen-Bereich eingesetzt. Basis für die Sicherheitsfunktionen ist dabei herkömmlicherweise u.a. ein im Motor integriertes Gebersystem zur Lage-/Positions- und Drehzahlerfassung. Für andere Branchen, z.B. für Produktionsmaschinen etc., werden solche Sicherheitsfunktionen ebenfalls immer interessanter. In diese Branchen werden meist geberlose Drehstrommotoren in Verbindung mit sog. Frequenzumrichtern eingesetzt. Solche geberlosen Drehstrommotoren bieten jedoch bisher keine Sicherheitsfunktionalität.

Bekannt ist bisher nur eine Funktion "Sicherer Halt". Dabei werden die Ansteuersignale für die Leistungstransistoren "sicher" gesperrt, was der Fachmann mit dem Begriff "Impulssperre" bezeichnet Damit wird ein ungewolltes Wiederanlaufen des Motors verhindert.

Mit dem Ausdruck "Sicher" soll dabei zum Ausdruck gebracht werden, dass die jeweiligen Anforderungen im Sinne der Berufsgenossenschaften und Berufsgenossenschaftlichen Institute für Arbeitssicherheit erfüllt werden.

Dabei besteht im Hinblick auf eine Fehlererkennung zum Schutz für Mensch und Maschine ein grundsätzliches Bedürfnis, für solche geberlose Drehstromantriebe auch die Funktion "Sichere Geschwindigkeit" zur Verfügung zu stellen.

Alle bisher verfolgten Lösungsansätze zur Realisierung einer solchen Funktion scheiterten an der Genauigkeit oder der Dynamik der erfassten (bzw. aus Strom und Spannung berechneten) Drehzahl. Auch für eine Rückgewinnung der Ständerfrequenz aus den Transistoransteuersignalen zur Ansteuerung eines Wechselrichters ist bisher keine befriedigende Lösung bekannt geworden.

Aufgabe der vorliegenden Erfindung ist es daher, eine Antriebssteuerung zur sicheren Geschwindigkeitsüberwachung für geberlose Drehstromantriebe zu schaffen.

Gemäß der vorliegenden Erfindung wird diese Aufgabe durch eine Antriebssteuerung für einen Drehstrommotor über einen Wechselrichter gelöst mit

- einem ersten und einem zweiten System zur Erzeugung von einem bei ungestörtem Betrieb redundanten ersten und zweiten Satz von Steuersignalen für Stromventile des Wechselrichters, indem
- ein System mit einem Drehzahlsollwert beaufschlagt wird, anhand dessen ein im wesentlichen proportionaler Frequenz-Sollwert zur Generierung des ersten Satzes von Steuersignalen ableitbar ist, der dem anderen System über eine Kommunikationsschnittstelle zur Generierung des zweiten Satzes von Steuersignalen bereitstellbar ist, wobei
- der jeweilige Frequenz-Sollwert im jeweiligen System begrenzbar und/oder überwachbar ist, wobei
- zwei Fehleraufdeckungsmittel zur Überwachung des ersten und des zweiten Satzes von Steuersignalen vorgesehen sind, wobei eine Teilmenge korrespondierender Steuersignale des ersten und des zweiten Satzes von Steuersignalen in dem ersten Fehleraufdeckungsmittel miteinander vergleichbar sind und die übrigen korrespondierenden Steuersignale des ersten und des zweiten Satzes von Steuersignalen in dem zweiten Fehleraufdeckungsmittel miteinander vergleichbar sind, wobei
- im Fall voneinander abweichender korrespondierender Steuersignale durch das jeweilige Fehleraufdeckungsmittel die Stromventile des Wechselrichters zweikanalig abschaltbar sind.

Wenn der Wechselrichter Stromventile in Brückenschaltung aufweist, so hat es sich als besonders günstig herausgestellt, wenn

- im Fall voneinander abweichender korrespondierender Steuersignale durch ein Fehleraufdeckungsmittel die Impulse für den oberen Brückenzweig von Stromventilen sperrbar und
- durch das andere Fehleraufdeckungsmittel die Impulse für den unteren Brückenzweig von Stromventilen sperrbar sind.

Dabei hat es sich für eine technische Realisierung als besonders effektiv erwiesen, wenn als dem Drehzahlsollwert im wesentlichen proportionaler Sollwert zur Generierung der beiden Steuersignalsätze jeweils der Ständerfrequenzsollwert dient.

Nach einer weiteren vorteilhaften Ausgestaltung der Antriebssteuerung nach der Erfindung lässt sich dies für einen Asynchronmotor besonders gut umsetzen, indem

- das mit dem Drehzahlsollwert beaufschlagte System ein Rechenmittel mit integriertem Drehzahlregler umfasst, das (in Kenntnis der Motordaten) anhand des Drehzahlsollwertes sowie der jeweiligen Phasenstromistwerte neben dem jeweiligen Ständerfrequenzsollwert den jeweiligen Schlupffrequenzsollwert, Ständerspannungssollwertbetrag und Lastwinkel im Läuferflusskoordinatensystem liefert, anhand derer

- mittels jeweiliger Regelungskomponenten der beiden Systeme jeweilige Phasenspannungssollwerte zur Ansteuerung eines jeweiligen Steuersatzes zur Generierung von jeweiligen Steuersignalen erzeugbar sind.

Bei einem Synchronmotor ist die Vorgehensweise entsprechend, jedoch sind die oben erwähnten Schlupffrequenzwerte systembedingt gleich Null.

Wenn

- das erste Fehleraufdeckungsmittel zur Überwachung der korrespondierenden Steuersignale für die Stromventile des oberen Brückenzweiges und
- das zweite Fehleraufdeckungsmittel zur Überwachung der korrespondierenden Steuersignale für die Stromventile des unteren Brückenzweiges dient,

so lassen sich besonders einfache Fehleraufdeckungsmittel realisieren.

Dies lässt sich besonders gut dadurch erreichen, dass jedes Fehleraufdeckungsmittel zu überwachende korrespondierende Steuersignale für die Stromventile logisch Exklusiv-Oder verknüpft und die Ergebnisse logisch zu einem Summenfehlersignal verknüpft.

Eine besonders kostengünstige technische Realisierung verwendet nur einen Satz von Steuersignalen zur Ansteuerung der Stromventile des Wechselrichters.

Indem

- jeweilige Optokoppler zur Übertragung von Steuersignalen zu den Stromventilen dienen und wobei
- durch ein Fehleraufdeckungsmittel im Fehlerfall die Versorgungsspannung der den zugeordneten Steuersignalen zugehörigen Optokoppler unterbrechbar ist,

lassen sich zum einen die Sicherheit der Antriebssteuerung weiter erhöhen und zum anderen der technische Aufwand zur Abschaltung der Steuersignale minimieren.

Dies lässt sich weiter dadurch vereinfachen, dass durch ein Fehleraufdeckungsmittel im Fehlerfall die Versorgungsspannung der dem jeweils zugeordneten Brückenzweig zugehörigen Optokoppler unterbrechbar ist.

Indem

- ein Mittel zur Zwangsdynamisierung der beiden Impulssperrpfade vorgesehen wird, mit dem
- ein Störsignal auf den Sollwert zur Generierung der Sätze von Steuersignalen aufschaltbar ist und
- die Versorgungsspannungen für eine Ansteuerung der Stromventile des oberen und die des unteren Brückenzweiges des Wechselrichters rücklesbar sind,

kann die Sicherheit der erfindungsgemäßen Anordnung weiter erhöht werden.

Dabei hat es sich als besonders sinnvoll erwiesen, wenn das Rücklesen der Versorgungsspannungen für eine Ansteuerung der Stromventile des oberen und die des unteren Brückenzweiges des Wechselrichters sequentiell erfolgt.

Eine weitere Steigerung der Sicherheit wird erreicht mit

- einem weiteren Mittel zur Zwangsdynamisierung der Sollwertbegrenzung, insbesondere des Ständerfrequenzsollwertes, mit dem
- in beiden Systemen ein jeweiliges Testsignal auf den Sollwert zur Generierung der Sätze von Steuersignalen aufschaltbar ist und
- jeweilige generierte Begrenzungssignale vergleichbar sind, insbesondere durch kreuzweisen Datenvergleich.

Weitere Vorteile und Details bei der Realisierung der Erfindung ergeben sich anhand der folgenden Beschreibung eines vorteilhaften Ausführungsbeispiels und in Verbindung mit den entsprechenden Figuren. Es zeigt in Prinzipdarstellung:

FIG 1    ein Blockschaltbild eines Antriebssystems mit einer Antriebssteuerung mit der Funktion "Sichere Geschwindigkeit" nach der Erfindung,

FIG 2    ein Blockschaltbild des internen Aufbaus der beiden Systeme dieses Antriebssystems,

FIG 3    ein Zeigerdiagramm zur Verdeutlichung der in der jeweiligen Regelung ermittelten bzw. verarbeiteten Parameter zur Antriebssteuerung und

FIG 4    ein Blockschaltbild des internen Aufbaus der beiden Fehleraufdeckungsmittel und deren Verschaltung mit den beiden Systemen der Antriebssteuerung.

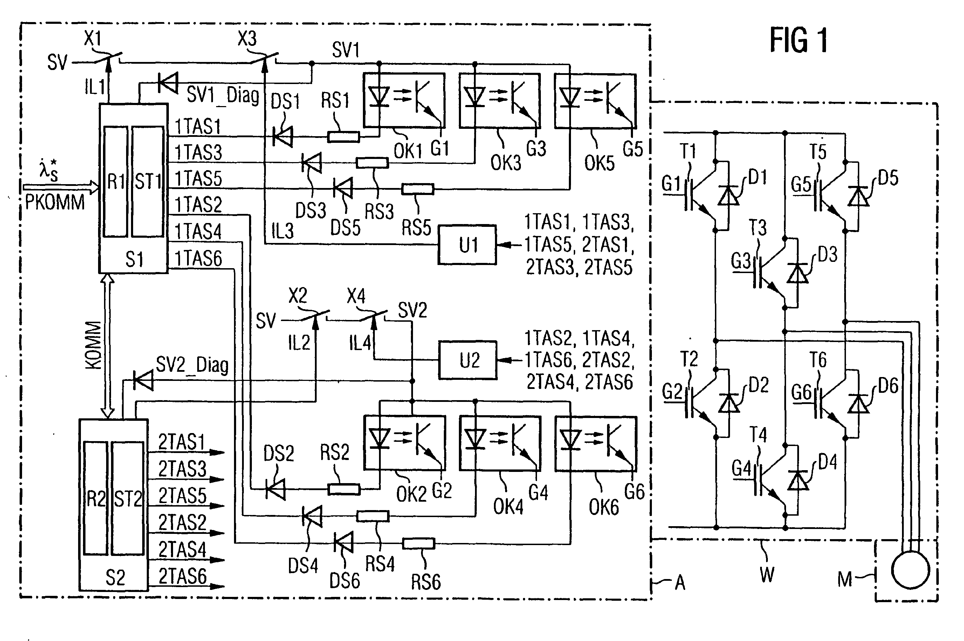

In der Darstellung nach FIG 1 ist eine mögliche technische Realisierung der Funktion "Sichere Geschwindigkeit" anhand eines Blockschaltbildes eines Antriebssystems mit einer Antriebssteuerung für einen Asynchronmotor gezeigt. Das Antriebssystem setzt sich zusammen aus einem Drehstrommotor M, der über einen Wechselrichter W mit in Brückenschaltung angeordneten IGBT-Transistoren T1 bis T6 als Stromventile gespeist wird. Jeder Transistor T1 bis T6 verfügt über eine Freilaufdiode D1 bis D6 und wird durch jeweilige Gate-Signale G1 bis G6 von der Antriebssteuerung A angesteuert.

Die Antriebssteuerung A verfügt über zwei Systeme S1 und S2, über die der Wechselrichter W und damit der Drehstrommotor M betrieben werden. Jedes System S1 und S2 verfügt über Intelligenz, z.B. in Form eines Mikroprozessors, Mikrocontrollers oder eines entsprechenden anwendungsspezifizierten integrierten Schaltkreises ASIC. In einem jeweiligen Steuersatz ST1 und ST2, welcher jeweils einem System S1 oder S2 zugeordnet ist, aber auch autonom sein kann, werden jeweilige Transistoransteuersignale 1TAS1 bis 1TAS6 für System S1 und 2TAS1 bis 2TAS6 für System S2 errechnet.

Im Ausführungsbeispiel werden die Transistoransteuersignale 1TAS1 bis 1TAS6 über zugeordnete Optokoppler OK1 bis OK6 als Gate-Signale G1 bis G6 bereitgestellt und zu den Leitungstransistoren T1 bis T6 übertragen. Jede Fotodiode eines Optokopplers ist anodenseitig mit der jeweils zugeordneten Versorgungsspannung SV1 oder SV2 verbunden und kathodenseitig über einen jeweils nachgeschalteten Widerstand RS1 bis RS6 und eine in Flussrichtung gepolte weitere Diode DS1 bis DS6 mit dem Steuersatz ST1 des Systems S1. Selbstverständlich könnte auch das System S2 diese Funktion anstelle von System S1 übernehmen.

Im vorliegenden Ausführungsbeispiel steuert ein Ansteuersignal 1TAS1 bis 1TAS6 den zugehörigen Leistungstransistor T1 bis T6 somit jeweils auf, wenn das Ansteuersignal Low-Pegel annimmt (negative Logik).

Neben dem Wechselrichter W zur Ansteuerung des Motors M umfasst das Antriebssystem nach dem Ausführungsbeispiel gemäß FIG 1 die erfindungsgemäße Antriebssteuerung A mit folgenden Systemkomponenten:

- ein System S1 mit integrierter Regelung R1 und Steuersatz ST1, wobei über den Steuersatz ST1, die Transistoransteuersignale 1TAS1-1TAS6 und die Optokoppler OK1-0K6 die Leistungstransistoren T1-T6 angesteuert werden. Die Spannungsversorgung für die Optokoppler zur Ansteuerung der oberen Transistoren T1, T3 und T5 ist SV1. Die Spannungsversorgung für die Optokoppler zur Ansteuerung der unteren Transistoren T2, T4 und T6 ist SV2.

- ein zweites System S2 mit integrierten Redundant-Komponenten R2 bezüglich der Regelung R1 und einem eigenen Steuersatz ST2. Über den Steuersatz ST2 werden die Transistoransteuersignale 2TAS1...2TAS6 auf entsprechende Art und Weise erzeugt.

- eine Kommunikationsschnittstelle KOMM zum Datenaustausch zwischen System S1 und System S2.

- eine Peripherieschnittstelle PKOMM, über die dem System S1 von einer übergeordneten Steuerung ein Drehzahlsollwert $\lambda_S$* vorgegeben wird.

Daneben kommt einer ersten Überwachungselektronik U1 und zweiten Überwachungselektronik U2 zur Fehleraufdeckung eine große Bedeutung zu. An die Überwachungselektronik U1 werden die Transistoransteuersignale 1TAS1, 1TAS3, 1TAS5 und 2TAS1, 2TAS3, 2TAS5 angeschlossen. An die Überwachungselektronik U2 werden die Transistoransteuersignale 1TAS2, 1TAS4, 1TAS6 und 2TAS2, 2TAS4, 2TAS6 angeschlossen. Die Ausgänge der beiden Überwachungselektroniken U1, U2 stellen Signale IL3 und IL4 bereit. Diese Signale schalten bei einer Fehleraufdeckung die Schalter X3 und X4 (mechanischer oder auch elektronischer Bauart), wodurch die Versorgungsspannungen SV1 und SV2 für die Optokoppler OK1 bis OK6, die aus einer gemeinsamen externen Versorgungsspannung SV gewonnen werden, sicher abgeschaltet werden.

Für die Funktion "Sicherer Halt" sind die beiden weiteren Schalter X1 und X2 vorgesehen. Die Funktion "sicherer Halt" wird ebenfalls durch eine Impulssperre realisiert, indem betriebsmäßig oder im Fehlerfall die Leistungstransistoren T1 bis T6 des Wechselrichters W abgeschaltet werden. Dies erfolgt, wie auch bei Fehleraufdeckung durch die Überwachungselektroniken U1, U2 mit den Signalen IL3 und IL4, vorzugsweise durch Unterbrechen der aus einer externen Spannung SV abgeleiteten Versorgungsspannung SV1 für die Optokoppler OK1, OK3 und OK5 für den oberen Brückenzweig von Leistungstransistoren über einen Schalter X1 (mechanischer oder auch elektronischer Bauart) mit dem Signal IL1 durch das System S1 und einer weiteren Versorgungsspannung SV2 für die Optokoppler OK2, OK4 und OK6 für den unteren Brückenzweig über einen Schalter X2 mit dem Signal IL2 durch das System S2 sowie eventuell zusätzlich durch Impulssperre im Steuersatz ST.

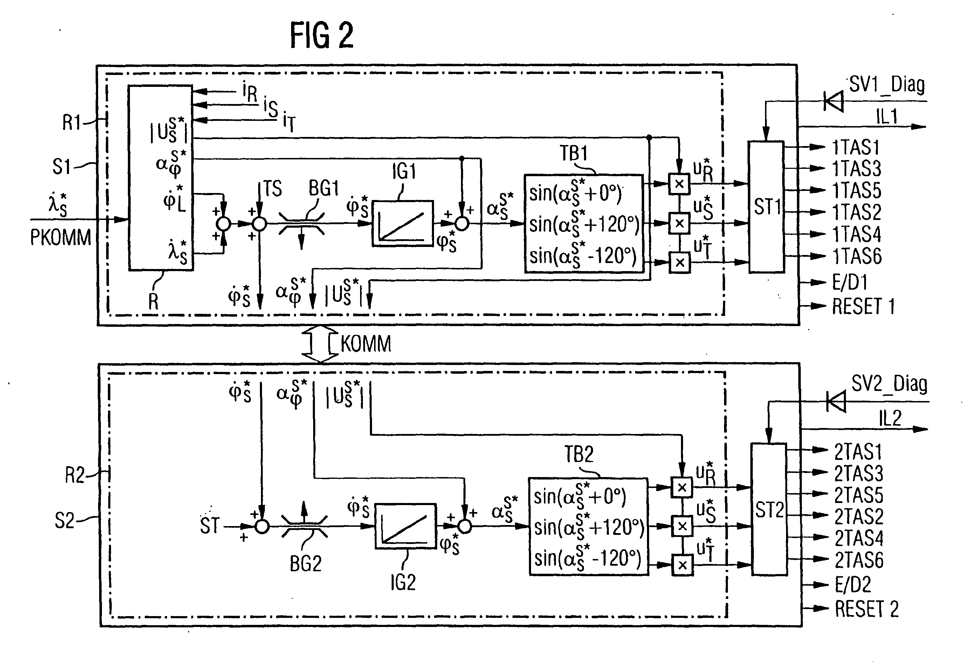

Für die im folgenden anhand von FIG 2 dargestellten Systeme S1 und S2 und die darin verarbeiteten Größen gilt folgende Indizierung für die physikalischen Bezeichnungen:

Ein hochgestellter Index bezeichnet die physikalische Größe (Vektor):
S = Ständer, L = Läufer, * = Sollwert.
Beispiel: $u^S$ ... Ständerspannung

Ein tiefgestellter Index (Buchstabe) bezeichnet das Koordinatensystem:
S = Ständer, $\varphi$ = Läuferfluss.

Beispiel: $i^S_\varphi$ = Ständerstrom im Läuferflusskoordinatensystem.

Ein tiefgestellter Index (Zahl) gibt die Richtung der transformierten Vektor-Komponente an:
1 = in Richtung der Abszisse, 2 = in Richtung der Ordinate. Beispiel: $u^S_{\varphi 2}$ = Ständerspannungssollwert-Komponente im Läuferflusskoordinatensystem senkrecht zur Läuferflussachse.

Das System S1 umfasst eine Regelungseinheit R1 mit einem Rechenwerk R sowie einen Steuersatz ST1. Über eine übergeordnete Steuerung (nicht gezeigt) wird der Drehzahlsollwert $\lambda_S$*. Im Rechenwerk R ist ein Drehzahlregler (nicht gezeigt) integriert. In dem Rechenwerk R werden nun der Drehzahlistwert $\dot{\lambda}_S$, der Schlupffrequenzsollwert $\dot{\varphi}_L{}^*$, der Ständerspannungssollwertbetrag $\left| U_S^{S\bullet} \right|$ und der Lastwinkel im Läuferflusskoordinatensystem $\alpha_\varphi{}^{S*}$ mit Kenntnis der Motordaten und Messung der Phasenströme $i_R$, $i_S$, $i_T$ berechnet.

Durch Addition von Drehzahlistwert $\dot{\lambda}_S$ und Schlupffrequenzsollwert $\dot{\varphi}_L{}^*$ wird der Ständerfrequenzsollwert $\dot{\varphi}_S{}^*$ ermittelt.

Dieser dient der weiteren Verarbeitung in der Regelung R1 und wird über die Kommunikationsschnittstelle KOMM zum System S2 übertragen.

Für den Fall eines Synchronmotors sind die jeweiligen Schlupffrequenzwerte systembedingt gleich Null.

Die Integration IG1 des Ständerfrequenzsollwertes $\dot{\varphi}_S{}^*$ in der Regelung R1 ergibt den mit der Ständerfrequenz umlaufenden Winkel $\varphi_S{}^*$. Durch Addition des Lastwinkels $\alpha_\varphi{}^{S*}$ zum Winkel $\varphi_S{}^*$ erhält man den für feldorientierten Betrieb erforderlichen Winkel $\boldsymbol{\alpha_S^{S\bullet}}$ im Ständerkoordinatensystem. Der Winkel $\boldsymbol{\alpha_S^{S\bullet}}$ und der Spannungsbetragssollwert $\left| U_S^{S\bullet} \right|$ sind dann die Stellgrößen für eine Steuerung der Drehfeldmaschine M im feldorientierten Betrieb. Über eine Sinustabelle TB1 erhält man die drei um 120˚ versetzten sinusförmigen Größen $\sin(\boldsymbol{\alpha_S^{S\bullet}}+0°)$, $\sin(\boldsymbol{\alpha_S^{S\bullet}}+120°)$ und $\sin(\boldsymbol{\alpha_S^{S\bullet}}-120°)$.

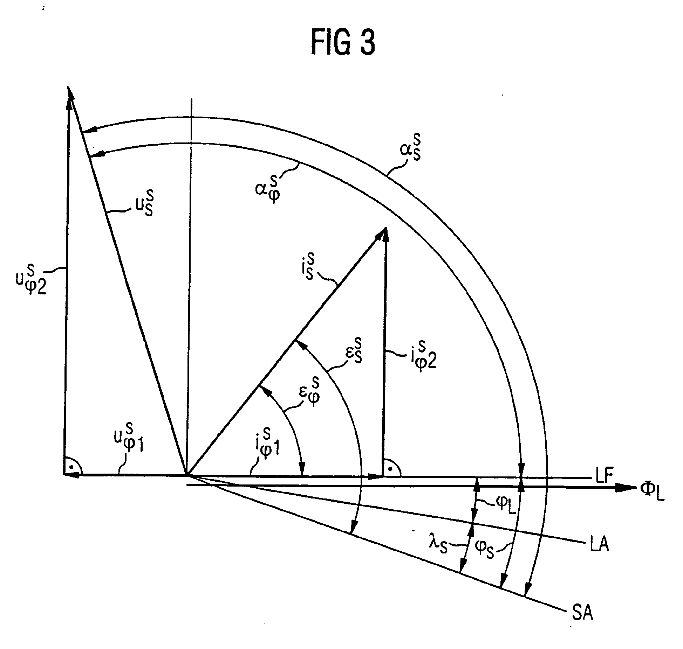

Die jeweilige Multiplikation x dieser sinusförmigen Größen mit dem Spannungsbetragssollwert $\left| U_S^{S\bullet} \right|$ ergibt schließlich die Phasenspannungssollwerte $u_R{}^*$, $u_S{}^*$ und $u_T{}^*$ zur Ansteuerung des Steuersatzes ST1. Die im Steuersatz ST1 pulsweitenmodulierten Phasenspannungssollwerte $u_R{}^*$, $u_S{}^*$ und $u_T{}^*$ ergeben die Transistoransteuersignale 1TAS1-1TAS6 für den Wechselrichter. Der beschriebene mathematische Zusammenhang lässt sich auf anschauliche Weise auch dem in FIG 3 gezeigten Zeigerdiagramm mit der Läuferflussachse LF, der um den Winkel $\varphi_L$ verschobenen Läuferachse LA und der um den weiteren Winkel $\lambda_S$ verschobenen Ständerachse SA entnehmen.

Die Drehzahl wird, abgesehen von der Schlupffrequenz bei A-synchronmaschinen, ausschließlich durch die Ständerfrequenz bzw. den Ständerfrequenzsollwert $\dot{\varphi}_S{}^*$ bestimmt. Daher ist es sinnvoll, den Ständerfrequenzsollwert zweikanalig zu begrenzen bzw. zu überwachen. Für System S1 geschieht dies in einer ersten Begrenzung BG1, für System S2 entsprechend. Diese Maßnahme führt jedoch noch nicht zu der Funktion "Sichere Geschwindigkeit", da Fehler in dem Pfad bis hin zur Tansistoransteuersignalbildung, so wie dieser vorangehend beschrieben wurde, trotzdem zu ungeordneten Bewegungen des Motors M führen können. Daher wird der Frequenzsollwert $\dot{\varphi}_S{}^*$ aus System S1 zusätzlich dem System S2 übergeben.

Das System S2 erhält, wie bereits erwähnt, über die Kommunikationsschnittstelle KOMM den Ständerfrequenzsollwert $\dot{\varphi}_S{}^*$ sowie die weiteren Größen Ständerspannungssollwertbetrag $\left| U_S^{S\bullet} \right|$ und Lastwinkel im Läuferflusskoordinatensystem $\alpha_\varphi{}^{S*}$. Im System S2 wird durch mit Ausnahme des Rechenwerks R zur Regelungseinheit R1 redundanten Komponenten R2 der Ständerfrequenzsollwert $\dot{\varphi}_S{}^*$ zusätzlich durch eine Begrenzung BG2 begrenzt und überwacht.

Mit denselben Operationen (IG2, TB2, x) werden in System S2 mit Hilfe des von System S1 an System S2 übergebenen Spannungsbetragssollwertes $\left| U_S^{S\bullet} \right|$ und Lastwinkels im Läuferflusskoordinatensystem $\alpha_\varphi{}^{S*}$ bei ungestörtem Betrieb zu System S1 identische Transistoransteuersignale 2TAS1 bis 2TAS6 erzeugt.

Hinsichtlich Spannungsbetragssollwertes $\left| U_S^{S\bullet} \right|$ ist folgendes zu beachten. Der Ständerstrom im Motor M wird hauptsächlich durch den Spannungsbetragssollwert bzw. die Ständerspannungsamplitude bestimmt. Ein einkanaliger Fehler bei der Spannungsbetragsollwertbildung führt also lediglich zu einem höheren oder niedrigeren Maschinenstrom und damit zu einem höheren oder niedrigeren Drehmoment. Das bedeutet, dass der Fall einer durchhängenden Last (z.B. bei einem Kran oder Aufzug) so noch nicht beherrscht werden kann. Die Sicherheitsfunktion zur sicheren Geschwindigkeitsüberwachung trägt bei Antrieben, bei denen eine durchhängende Last vorkommt, nicht. Bei einem Motor mit integriertem Geber hingegen wird die Geschwindigkeit auch bei gekippter Maschine erkannt und externe Bremseinrichtungen können dann aktiviert werden.

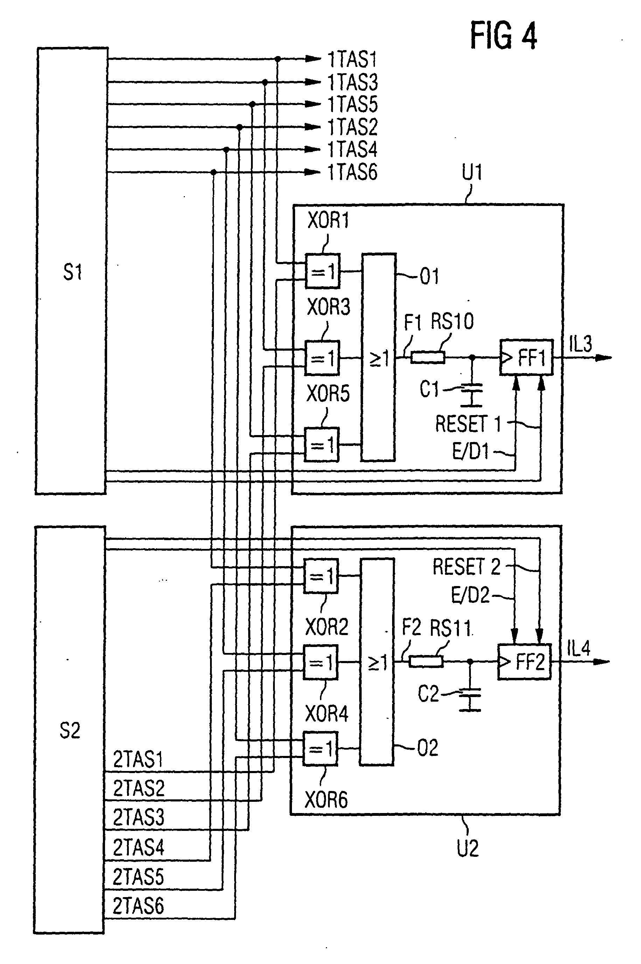

Wie aus der Darstellung nach FIG 4 ersichtlich ist, werden in der Überwachungselektronik U1 die vom System S1 gelieferten Transistoransteuersignale 1TAS1, 1TAS3, 1TAS5 mit den vom System S2 gelieferten korrespondierenden Signalen 2TAS1, 2TAS3, 2TAS5 über jeweilige logische Exklusiv-Oder-Verknüpfungen XOR1, XOR3, XOR5 miteinander verglichen und über ein logisches Oder-Gatter O1 zu einem Summenfehlersignal F1 verknüpft, welches über einem Spannungsteiler aus einem Widerstand RS10 und einer Kapazität C1 (Glitch Filter) an dem Speicher FF1 anliegt. Stimmen die Pulsmuster korrespondierender Ansteuersignale nicht überein, so wird über das Fehlersignal F1 ein Speicher FF1 mit dem Ausgangssignal IL3 gesetzt und über den Schalter X3 die Versorgungsspannung SV1 für die oberen Transistoransteuer-Optokoppler OK1, OK3, OK5 abgeschaltet.

In der Überwachungselektronik U2 werden die Transistoransteuersignale 1TAS2, 1TAS4, 1TAS6 und 2TAS2, 2TAS4, 2TAS6 über jeweilige logische Exklusiv-Oder-Verknüpfungen XOR2, XOR4, XOR6 miteinander verglichen und über ein logisches Oder-Gatter 02 zu einem Summenfehlersignal F2 verknüpft, welches über einem Spannungsteiler aus einem Widerstand RS11 und einer Kapazität C2 (ebenfalls als Glitch Filter) am Speicher FF2 anliegt. Stimmen ein oder mehrere Pulsmuster von korrespondierenden Ansteuersignalen nicht überein, so wird über das Fehlersignal F2 ein weiterer Speicher FF2 mit dem Ausgangssignal IL4 gesetzt und über den Schalter X4 die Versorgungsspannung SV2 für die unteren Transistoransteuer-Optokoppler OK2, OK4, OK6 abgeschaltet. Die so realisierte Fehleraufdeckung ist sehr sensitiv und fast verzögerungsfrei.

Die Funktionsfähigkeit der beiden zweikanaligen Impulssperrpfade mit den Schaltern X1 und X2 sowie X3 und X4 kann zyklisch überprüft und damit zwangsdynamisiert werden, z.B. nach jedem Einschalten der Versorgungsspannung. Dazu wird nach Betätigen der Schalter X1 und X3 die Versorgungsspannung SV1 über das jeweils hinter dem Schalter X1 und X3 abgegriffene Signal SV1_Diag und für die Versorgungsspannung SV2 über das Signal SV2_Diag im jeweiligen den Schalter X2, X4 betätigenden System S1 oder S2 zurückgelesen. D.h. bei Ausfall eines Systems S1 oder S2 kann immer noch das funktionsfähige andere System reagieren, da auch sogenannte schlafende Fehler durch die Zwangsdynamisierung aufgedeckt werden.

Zur entsprechenden Zwangsdynamisierung des Abschaltpfades mit den Signalen IL3 und IL4 über die Schalter X3 und X4 wird on- oder offline ein Störsignal ST in System S2 generiert und auf den Frequenzsollwert $\dot{\varphi}_S{}^*$ im System aufgeschaltet. Die Überprüfung der Abschaltpfade erfolgt wiederum durch Rücklesen der Signale SV1_Diag und SV2_Diag. Die Überprüfung sollte sequenziell erfolgen, da bei der Fehlerstimulation beide Überwachungselektroniken U1, U2 gleichzeitig ansprechen. Dazu können die jeweiligen Speicher FF1 und FF2 blockiert werden. Dies geschieht über entsprechende Steuersignale E/D1 von System S1 und E/D2 von System S2. Nach der Zwangsdynamisierung werden die Speicher FF1, FF2 über jeweilige Reset-Eingänge mit jeweiligen Signalen RESET1 und RESET2 wieder aktiv geschaltet.

Diese Überprüfung erfolgt vorzugsweise nach jedem Einschalten der Versorgungsspannung oder in einem konstanten Zeittakt wie etwa einem 8 Stunden Takt (sofern der Prozess dies zulässt). Mit dem Signal SV1_Diag erfolgt zusätzlich eine Impulssperre im Wechselrichtersteuersatz ST1.

D.h. es können keine gefahrbringende Bewegungen am Motor M entstehen. Über die Signale SV1_Diag und SV2_Diag kann die Funktion der Schalter X1 bis X4 überprüft werden.

Die Frequenzsollwertbegrenzungen BG1 und BG2 können ebenfalls zwangsdynamisiert werden. Dazu wird ein Testsignal TS auf den Frequenzsollwert für beide Systeme S1 und S2 aufgeschaltet. Beide Begrenzungen müssen bei dem gleichen Wert begrenzen bzw. ein Ansprechsignal von BG1 und BG2 generieren. Diese Überprüfung erfolgt vorzugsweise nach jedem Einschalten der Versorgungsspannung oder in einem konstanten Zeittakt wie etwa einem 8 Stunden Takt (sofern der Prozess dies zulässt) und über Kreuz zwischen den Systemen S1 und S2 durch kreuzweisen Datenvergleich.

Wird während des Betriebs ein Frequenzsollwert generiert, der zum gleichzeitigen Ansprechen der Begrenzungen BG1 und BG2 führt, so wird der Motor M bestmöglichst stillgesetzt, eine Warnung abgesetzt und das Wiedereinschalten verhindert. Der Anwender kann dann untersuchen, warum z.B. aus der Steuerung im Modus "sichere Geschwindigkeit" ein höherer Drehzahlsollwert vorgegeben wurde. Spricht nur eine Überwachung an, so wird sofort Impulslöschung ausgelöst.

Mit dieser erfindungsgemäßen Antriebssteuerung lassen sich damit folgende weitere Vorteile gegenüber dem Stand der Technik erreichen:

- für die Funktion "Sichere Geschwindigkeit" ist kein Gebersystem zur Geschwindigkeitserfassung erforderlich,
- die Schaltung ist zwangsdynamisierbar,
- das zweite System S2 inklusive der beiden Überwachungselektroniken U1, U2 ist optional vermarktbar,
- die Kosten für das zweite System S2 inklusive der beiden Überwachungselektroniken U1, U2 sind wesentlich niedriger als ein Gebersystem mit Anbau und Geberleitung,
- die Fehlererkennung erfolgt quasi ohne Zeitverzug (Glitch Filter <100μs),
- die Fehlertoleranz ist äußerst klein und
- die Funktion "sichere Geschwindigkeit" ist bei allen Drehfeldmaschinen ohne Gebersystem einsetzbar.

Neben der in dem Ausführungsbeispiel beschriebenen Realisierung der Verknüpfungslogik der Überwachungselektroniken U1, U2 um die Elemente XOR1 bis XOR6, O1, 02, RS10, RS11, C1, C2, FF1 und FF2 lassen sich unter Beibehaltung der Funktionalität auch alternative Ausführungsformen der Fehleraufdeckungsmittel der Erfindung finden. Insbesondere können auch beliebige andere Zuordnungen korrespondierender Ansteuersignale für die Überwachungselektroniken U1, U2 gewählt werden. Dies gilt auch für eine Ansteuerung durch den Steuersatz ST mit positiver Logik. Die beiden Systeme S1 und S2 können sowohl in Hardware (z.B. mit einem ASIC), als auch durch einen geeignet programmierten Mikroprozessor oder Mikrocontröller realisiert werden.

Ebenso ist es möglich, alle Schalter X1 bis X4 in Serie zu schalten, um darüber (auch zweikanalig) die Stromversorgung für alle Optokoppler OK1 bis OK6 abzuschalten.

**Patentansprüche**

1. Antriebssteuerung (A) für einen Drehstrommotor (M) über einen Wechselrichter (W), mit einem ersten (S1) und einem zweiten (S2) System zur Erzeugung von einem bei ungestörtem Betrieb redundanten ersten (1TAS1...1TAS6) und zweiten Satz (2TAS1... 2TAS6) von Steuersignalen für Stromventile (T1...T6) des Wechselrichters (W), indem ein System (S1) mit einem Drehzahlsollwert ($\ddot{\lambda}_S$*) beaufschlagt wird, anhand dessen ein im wesentlichen proportionaler Frequenz-Sollwert zur Generierung des ersten Satzes (1TAS1...1TAS6) von Steuersignalen ableitbar ist, der dem anderen System (S2) über eine Kommunikationsschnittstelle (KOMM) zur Generierung des zweiten Satzes (2TAS1...2TAS6) von Steuersignalen bereitstellbar ist, wobei der jeweilige Frequenz-Sollwert im jeweiligen System (S1, S2) begrenzbar und/oder überwachbar ist, wobei zwei Fehleraufdekkungsmittel (U1, U2) zur Überwachung des ersten und des zweiten Satzes von Steuersignalen vorgesehen sind, wobei eine Teilmenge korrespondierender Steuersignale (1TAS1, 1TAS3, 1TAS5, 2TAS1, 2TAS3, 2TAS5) des ersten und des zweiten Satzes von Steuersignalen in dem ersten Fehleraufdeckungsmittel (U1) miteinander vergleichbar sind und die übrigen korrespondierenden Steuersignale (1TAS2, 1TAS4, 1TAS6, 2TAS2, 2TAS4, 2TAS6) des ersten und des zweiten Satzes von Steuersignalen in dem zweiten Fehleraufdekkungsmittel (U1) miteinander vergleichbar sind, wobei im Fall voneinander abweichender korrespondierender Steuersignale (1TAS1, 2TAS1...1TAS6, 2TAS6) durch das jeweilige Fehleraufdeckungsmittel (U1, U2) die Stromventile des Wechselrichters zweikanalig abschaltbar sind.

2. Antriebssteuerung (A) nach Anspruch 1, wobei der Wechselrichter (W) Stromventile (T1...T6) in Brükkenschaltung aufweist und im Fall voneinander abweichender korrespondierender Steuersignale (1TAS1, 2TAS1...1TAS6, 2TAS6) durch ein Fehleraufdeckungsmittel (U1) die Impulse für den oberen Brückenzweig von Stromventilen sperrbar und durch das andere Fehleraufdeckungsmittel (U2) die Impulse für den unteren Brückenzweig von Stromventilen sperrbar sind.

3. Antriebssteuerung (A) nach Anspruch 1 oder 2, wobei als dem Drehzahlsollwert ($\dot{\lambda}_S$*) im wesentlichen proportionaler Frequenz-Sollwert zur Generierung der beiden Steuersignalsätze (1TAS1...1TAS6, 2TAS1...2TAS6) jeweils der Ständerfrequenzsollwert ($\dot{\varphi}_S$*) dient.

4. Antriebssteuerung (A) nach Anspruch 3 für einen Synchronmotor, wobei das mit dem Drehzahlsoll-

wert ($\dot{\lambda}_S$*) beaufschlagte System (S1) ein Rechenmittel mit integriertem Drehzahlregler umfasst, das anhand des Drehzahlsollwertes ($\lambda_S$*) sowie der jeweiligen Phasenstromistwerte ($i_R$, $i_S$, $i_T$) neben dem jeweiligen Ständerfrequenzsollwert ($\varphi_S$*) den jeweiligen Ständerspannungssollwertbetrag ( $\left|U_s^{s\bullet}\right|$ ) und Lastwinkel ($\alpha_\varphi S$*) im Läuferflusskoordinatensystem liefert, anhand derer mittels jeweiliger Regelungskomponenten der beiden Systeme (S1, S2) jeweilige Phasenspannungssollwerte zur Ansteuerung eines jeweiligen Steuersatzes zur Generierung von jeweiligen Steuersignalen (1TAS1...1TAS6, 2TAS1...2TAS6) erzeugbar sind.

5. Antriebssteuerung (A) nach Anspruch 3 für einen Asynchronmotor, wobei das mit dem Drehzahlsollwert ($\dot{\lambda}_S$*) beaufschlagte System (S1) ein Rechenmittel mit integriertem Drehzahlregler umfasst, das anhand des Drehzahlsollwertes ($\lambda_S$*) sowie der jeweiligen Phasenstromistwerte ($i_R$, $i_S$, $i_T$) neben dem jeweiligen Ständerfrequenzsollwert ($\dot{\varphi}_S$*) den jeweiligen Schlupffrequenzsollwert, Ständerspannungssollwertbetrag ( $\left|U_s^{s\bullet}\right|$ ) und Lastwinkel ($\alpha_\varphi S$*) im Läuferflusskoordinatensystem liefert, anhand derer mittels jeweiliger Regelungskomponenten der beiden Systeme (S1, S2) jeweilige Phasenspannungssollwerte zur Ansteuerung eines jeweiligen Steuersatzes zur Generierung von jeweiligen Steuersignalen (1TAS1...1TAS6, 2TAS1...2TAS6) erzeugbar sind.

6. Antriebssteuerung (A) nach einem der vorangehenden Ansprüche, wobei das erste Fehleraufdekkungsmittel (U1) zur Überwachung der korrespondierenden Steuersignale (1TAS1, 1TAS3, 1TAS5, 2TAS1, 2TAS3, 2TAS5) für die Stromventile (T1, T3, T5) des oberen Brückenzweiges und das zweite Fehleraufdeckungsmittel (U2) zur Überwachung der korrespondierenden Steuersignale (1TAS2, 1TAS4, 1TAS6, 2TAS2, 2TAS4, 2TAS6) für die Stromventile (T2, T4, T6) des unteren Brückenzweiges dient.

7. Antriebssteuerung (A) nach einem der vorangehenden Ansprüche, wobei jedes Fehleraufdeckungsmittel (U1, U2) zu überwachende korrespondierende Steuersignale (1TAS1, 2TAS1...1TAS6, 2TAS6) für die Stromventile (T1...T6) logisch Exklusiv-Oder (XOR1...XOR6) verknüpft und die Ergebnisse logisch (O1, O2) zu einem Summenfehlersignal (F1, F2) verknüpft.

8. Antriebssteuerung (A) nach einem der vorangehenden Ansprüche, wobei nur ein Satz (1TAS1...1TAS6, 2TAS1...2TAS6) von Steuersignalen zur Ansteuerung der Stromventile (T1...T6) des Wechselrichters (W) dient.

9. Antriebssteuerung (A) nach einem der vorangehenden Ansprüche, wobei jeweilige Optokoppler (OK1...OK6) zur Übertragung von Steuersignalen (1TAS1...1TAS6) zu den Stromventilen (T1...T6) dienen und wobei durch ein Fehleraufdeckungsmittel (U1, U2) im Fehlerfall die Versorgungsspannung (SV1, SV2) der den zugeordneten Steuersignalen (1TAS1, 2TAS1 ...1TAS6, 2TAS6) zugehörigen Optokoppler (OK1...OK6) unterbrechbar ist.

10. Antriebssteuerung (A) nach einem der vorangehenden Ansprüche 2 bis 7, wobei jeweilige Optokoppler (OK1...OK6) zur Übertragung von Steuersignalen (1TAS1...1TAS6) zu den Stromventilen (T1...T6) dienen und wobei durch ein Fehleraufdeckungsmittel (U1, U2) im Fehlerfall die Versorgungsspannung (SV1, SV2) der dem jeweils zugeordneten Brückenzweig zugehörigen Optokoppler (OK1...OK6) unterbrechbar ist.

11. Antriebssteuerung (A) nach einem der vorangehenden Ansprüche 2 bis 9, mit einem Mittel zur Zwangsdynamisierung der beiden Impulssperrpfade (IL3, IL4), mit dem ein Störsignal (ST) auf den Sollwert zur Generierung der Sätze (1TAS1...1TAS6, 2TAS1...2TAS6) von Steuersignalen aufschaltbar ist und die Versorgungsspannungen (SV1, SV2) für eine Ansteuerung der Stromventile des oberen (T1, T3, T5) und die des unteren (T2, T4, T6) Brückenzweiges des Wechselrichters (W) rücklesbar sind.

12. Antriebssteuerung (A) nach Anspruch 11, wobei das Rücklesen der Versorgungsspannungen (SV1, SV2) für eine Ansteuerung der Stromventile des oberen (T1, T3, T5) und die des unteren (T2, T4, T6) Brückenzweiges des Wechselrichters (W) sequentiell erfolgt.

13. Antriebssteuerung (A) nach einem der vorangehenden Ansprüche, mit einem Mittel zur Zwangsdynamisierung der Sollwertbegrenzung, insbesondere des Ständerfrequenzsollwertes ($\dot{\varphi}_S$*), mit dem in beiden Systemen (S1, S2) ein jeweiliges Testsignal (TS) auf den Sollwert zur Generierung der Sätze (1TAS1...1TAS6, 2TAS1...2TAS6) von Steuersignalen aufschaltbar ist und jeweilige generierte Begrenzungssignale (BG1, BG2) vergleichbar sind, insbesondere durch kreuzweisen Datenvergleich.

## Claims

1. Drive controller (A) for a three-phase motor (M) by means of an inverter (W), having a first (S1) and a second (S2) system for generating a first set (1TAS1...1TAS6) and second set (2TAS1...2TAS6) of control signals , redundant in trouble-free operation, for electrical valves (T1...T6) of the inverter (W), in that one system (S1) has a setpoint speed value ($\dot{\lambda}_S$*) applied to it, on the basis of which an essentially proportional setpoint frequency value can be derived for generating the first set (1TAS1...1TAS6) of control signals, which can be provided for the other system (S2) via a communication interface (KOMM) for generating the second set (2TAS1...2TAS6) of control signals, wherein the respective setpoint frequency value in the respective system (S1, S2) can be limited and/or can be monitored, wherein two fault detecting means (U1, U2) are provided for monitoring the first and second sets of control signals, it being possible for a subset of corresponding control signals (1TAS1, 1TAS3, 1TAS5, 2TAS1, 2TAS3, 2TAS5) of the first and second sets of control signals to be compared with one another in the first fault detecting means (U1) and the remaining corresponding control signals (1TAS2, 1TAS4, 1TAS6, 2TAS2, 2TAS4, 2TAS6) of the first and second sets of control signals to be compared with one another in the second fault detecting means (U2), wherein, in the case of corresponding control signals (1TAS1, 2TAS1...1TAS6, 2TAS6) deviating from one another, the electrical valves of the inverter can be switched off in a two-channel mode by the respective fault detecting means (U1, U2).

2. Drive controller (A) according to Claim 1, wherein the inverter (W) has electrical valves (T1...T6) in bridge connection and, in the case of corresponding control signals (1TAS1, 2TAS1...1TAS6, 2TAS6) deviating from one another, the pulses for the upper bridge arm of electrical valves can be inhibited by one fault detecting means (U1) and the pulses for the lower bridge arm of electrical valves can be inhibited by the other fault detecting means (U2).

3. Drive controller (A) according to Claim 1 or 2, wherein the setpoint stator frequency value ($\dot{\varphi}_S$*) respectively serves as the setpoint frequency value essentially proportional to the setpoint speed value ($\dot{\lambda}_S$*) for generating the two sets of control signals (1TAS1...1TAS6, 2TAS1...2TAS6).

4. Drive controller (A) according to Claim 3, for a synchronous motor wherein the system (S1) to which the setpoint speed value ($\dot{\lambda}_S$*) is applied comprises an arithmetical and logical means with an integrated speed controller, which supplies on the basis of the setpoint speed value ($\lambda_S$*) and the respective actual phase current values ($i_R$, $i_S$, $i_T$) not only the respective setpoint stator frequency value ($\varphi_S$*) but also the respective setpoint stator voltage value ($|U^*_S|$) and load angle ($\alpha_\varphi{}^{S*}$) in the rotor flux system of coordinates, on the basis of which respective setpoint phase voltage values for driving a respective control unit for generating respective control signals (1TAS1...1TAS6, 2TAS1...2TAS6) can be generated by means of respective closed-loop control components of the two systems (S1, S2).

5. Drive controller (A) according to Claim 3, for an asynchronous motor, wherein the system (S1) to which the setpoint speed value ($\lambda_S{}^*$) is applied comprises an arithmetical and logical means with an integrated speed controller, which supplies on the basis of the setpoint speed value ($\lambda_S{}^*$) and the respective actual phase current values ($i_R$, $i_S$, $i_T$) not only the respective setpoint stator frequency value ($\varphi_S{}^*$) but also the respective setpoint slip frequency value, the respective setpoint stator voltage value ($|U^{S^*}{}_S|$) and load angle ($\alpha_\varphi{}^{S^*}$) in the rotor flux system of coordinates, on the basis of which respective setpoint phase voltage values for driving a respective control unit for generating respective control signals (1TAS1...1TAS6, 2TAS1...2TAS6) can be generated by means of respective closed-loop control components of the two systems (S1, S2).

6. Drive controller (A) according to one of the preceding claims, wherein the first fault detecting means (U1) serves for monitoring the corresponding control signals (1TAS1, 1TAS3, 1TAS5, 2TAS1, 2TAS3, 2TAS5) for the electrical valves (T1, T3, T5) of the upper bridge arm and the second fault detecting means (U2) serves for monitoring the corresponding control signals (1TAS2, 1TAS4, 1TAS6, 2TAS2, 2TAS4, 2TAS6) for the electrical valves(T2, T4, T6) of the lower bridge arm.

7. Drive controller (A) according to one of the preceding claims, wherein each fault detecting means (U1, U2) performs a logic exclusive-OR operation (XOR1...XOR6) on corresponding control signals (1TAS1, 2TAS1...1TAS6, 2TAS6) to be monitored for the electrical valves (T1...T6) and logically combines the results (O1, O2) to form a cumulative fault signal (F1, F2).

8. Drive controller (A) according to one of the preceding claims, wherein only one set (1TAS1...1TAS6, 2TAS1...2TAS6) of control signals serves for driving the electrical valves (T1...T6) of the inverter (W).

9. Drive controller (A) according to one of the preceding claims, wherein respective optocouplers (OK1...OK6) serve for the transmission of control signals (1TAS1...1TAS6) to the electrical valves (T1...T6) and a fault detecting means (U1, U2) allows the supply voltage (SV1, SV2) of the optocouplers (OK1...OK6) associated with the assigned control signals (1TAS1, 2TAS1...1TAS6, 2TAS6) to be interrupted in the event of a fault.

10. Drive controller (A) according to one of the preceding Claims 2 to 7, wherein respective optocouplers (OK1...OK6) serve for the transmission of control signals (1TAS1...1TAS6) to the electrical valves (T1...T6) and a fault detecting means (U1, U2) allows the supply voltage (SV1, SV2) of the optocouplers (OK1...OK6) associated with the respectively assigned bridge arm to be interrupted in the event of a fault.

11. Drive controller (A) according to one of the preceding Claims 2 to 9, having a means for enforced dynamization of the two pulse inhibiting paths (IL3, IL4), with which an interference signal (ST) can be applied to the setpoint value for generating the sets (1TAS1...1TAS6, 2TAS1...2TAS6) of control signals and the supply voltages (SV1, SV2) for driving the electrical valves of the upper bridge arm (T1, T3, T5) and those of the lower bridge arm (T2, T4, T6) of the inverter (W) can be read back.

12. Drive controller (A) according to Claim 11, wherein the reading back of the supply voltages (SV1, SV2) for driving the electrical valves of the upper bridge arm (T1, T3, T5) and those of the lower bridge arm (T2, T4, T6) of the inverter (W) takes place sequentially.

13. Drive controller (A) according to one of the preceding claims, having a means for enforced dynamization of the setpoint value limitation, in particular of the setpoint stator frequency value ($\varphi_S{}^*$), with which in both systems (S1, S2) a respective test signal (TS) can be applied to the setpoint value for generating the sets (1TAS1...1TAS6, 2TAS1...2TAS6) of control signals and respective generated limitation signals (BG1, BG2) can be compared, in particular by crosswise data comparison.

**Revendications**

1. Commande ( A ) d'entraînement d'un moteur ( M ) à courant triphasé par un onduleur ( W ) comprenant un premier ( S1 ) et un deuxième ( S2 ) systèmes de production de premier ( 1TAS1...1TAS6 ) et de deuxième jeux ( 2TAS1...2TAS6 ) redondants, lorsque le fonctionnement n'est pas perturbé, de signaux de commande de soupapes ( T1...T6 ) de courant de l'onduleur ( W ), en alimentant un système ( S1 ) en une valeur ($\dot{\lambda}_S{}^*$) de consigne de vitesse de rotation, au moyen de laquelle une valeur de consigne de fréquence sensiblement proportionnelle peut être déduite pour la production ( 1TAS1... 1TAS6 ) de signaux de commande, valeur qui peut être mise à disposition de l'autre système ( S2 ) par une interface ( KOMM ) de communication pour la production du deuxième jeu ( 2TAS1...2TAS6 ) de signaux de commande, la valeur de consigne de fréquence respective pouvant être limitée et/ou contrôlée dans chaque système ( S1, S2 ), dans laquelle il est prévu deux moyens ( U1, U2 ) de recherche d'erreur pour contrôler le premier et le deuxième jeux de signaux de commande, dans laquelle des quantités partielles de signaux 1TAS1, 1TAS3, 1TSA5, 2TAS1, 2TAS3, 2TAS5 ) de commande correspondants du premier et du deuxième jeux de signaux de commande peuvent être comparées entre elles dans le premier moyen ( U1 ) de recherche d'erreur et les autres signaux ( 1TAS2, 1TAS4, 1TAS6, 2TAS2, 2TAS4, 2TAS6 ) de commande correspondants du premier et du deuxième jeux de signaux de commande peuvent être comparés entre eux dans le deuxième moyen ( U2 ) de recherche d'erreur, dans laquelle, dans le cas de signaux ( 1TAS1, 2TAS1...1TAS6, 2TAS6 ) de commande correspondants s'écartant les uns des autres, les soupapes de courant de l'onduleur peuvent être bloquées en deux canaux par le moyen ( U1, U2 ) de recherche d'erreur respectif.

2. Commande ( A ) d'entraînement suivant la revendication 1, dans laquelle l'onduleur ( W ) a des soupapes ( T1...T6 ) de courant en un circuit en pont et, dans le cas de signaux ( 1TAS1, 2TAS1...1TAS6, 2TAS6 ) de commande correspondants s'écartant les uns des autres, les impulsions pour la branche supérieure du pont de soupapes de courant peuvent être bloquées par l'un des moyen ( U1 ) de recherche d'erreur et les impulsions pour l'autre branche inférieure du pont de soupapes de courant peuvent être bloquées par l'autre moyen ( U2 ) de recherche d'erreur.

3. Commande ( A ) d'entraînement suivant la revendication 1 ou 2, dans laquelle on se sert, comme valeur de consigne de fréquence sensiblement proportionnelle à la valeur ($\lambda_S$*) de consigne de vitesse de rotation, pour la production des deux jeux ( 1TAS1... 1TAS6, 2TAS1...2TAS6 ) de signaux de commande respectivement de la valeur ($\dot{\varphi}_S$*) de consigne de fréquence du stator.

4. Commande ( A ) d'entraînement suivant la revendication 3 pour un moteur synchrone, dans laquelle le système ( S1 ), alimenté en la valeur ($\dot{\lambda}_S$*) de consigne de vitesse de rotation, comprend un moyen informatique à régulateur de vitesse de rotation intégré, qui, au moyen de la valeur ($\dot{\lambda}_S$*) de consigne de vitesse de rotation ainsi que des valeurs ( $i_R$, $i_S$, $i_T$ ) réelles de courant de base respectives fournit, outre la valeur ($\dot{\varphi}_S$*) de consigne de fréquence de stator respective, la valeur absolue ( $\left|U_s^{\dot{s}\bullet}\right|$ ) de consigne de tension du stator et l'angle ($\alpha_\varphi S$*) de charge dans le système de coordonnées de flux du rotor, aux moyens desquels, à l'aide de composants respectifs de régulations des deux systèmes ( S1, S2 ), des valeurs de consigne de tension de phase respectives peuvent être produites pour commander un jeu de commande respectif pour la production de signaux ( 1TAS1...1TAS6, 2TAS1...2TAS6 ) de commande respectifs.

5. Commande ( A ) d'entraînement suivant la revendication 3 pour un moteur asynchrone, dans laquelle le système ( S1 ), alimenté en la valeur ($\dot{\lambda}_S$*) de consigne de vitesse de rotation, comprend un moyen informatique à régulateur de vitesse de rotation intégré, qui, au moyen de la valeur ($\dot{\lambda}_S$*) de consigne de vitesse de rotation ainsi que des valeurs ( $i_R$, $i_S$, $i_T$ ) de courant de base respectives fournit, outre la valeur ($\dot{\varphi}_S$*) de consigne de fréquence du rotor respectif, la valeur de consigne de fréquence de glissement, la valeur absolue ( $\left|U_s^{\dot{s}\bullet}\right|$ ) de consigne de tension du stator et l'angle ($\alpha_\varphi S$*) de cnarge dans le système de coordonnées de flux du rotor, aux moyens desquels, à l'aide de composants respectifs de régulation ( S1, S2 ), des valeurs de consigne de tensions de phase respectives peuvent être produites pour commander un jeu de commande respectif pour la production de signaux ( 1TAS1...1TAS6, 2TAS1...2TAS6 ) de commande respectifs.

6. Commande ( A ) d'entraînement suivant l'une des revendications précédentes, dans laquelle le premier moyen ( U1 ) pour trouver une erreur sert à contrôler les signaux ( 1TAS1, 1TAS3, 1TSA5, 2TAS1, 2TAS3, 2TAS5 ) de commande correspondants des soupapes ( T1, T3, T5 ) de courant de la branche supérieure du pont et le deuxième moyen ( U2 ) pour trouver une erreur sert à contrôler les signaux ( 1TAS2, 1TAS4, 1TAS6, 2TAS2, 2TAS4, 2TAS6 ) de commande correspondants des soupapes ( T2, T4, T6 ) de courant de la branche inférieure du pont.

7. Commande ( A ) d'entraînement suivant l'une des revendications précédentes, dans laquelle chaque moyen ( U1, U2 ) pour trouver une erreur combine en OU exclusif ( XOR1...XOR6 ) logique des signaux ( 1TAS1, 2TAS1...1TAS6, 2TAS6 ) de commande correspondants à contrôler des soupapes ( T1...T6 ) de courant et combine logiquement ( O1, 02 ) les résultats en un signal ( F1, F2 ) d'erreur somme.

8. Commande ( A ) d'entraînement suivant l'une des revendications précédentes, dans laquelle seul un jeu ( 1TAS1...1TAS6, 2TAS1...2TSA6 ) de signaux de commande sert à commander les soupapes ( T1 ... T6 ) de courant de l'onduleur ( W ).

9.  Commande ( A ) d'entraînement suivant l'une des revendications précédentes, dans laquelle respectivement des optocoupleurs ( OK1...OK6 ) servent à transmettre des signaux ( 1TAS1...1TAS6 ) de commande aux soupapes ( T1...T6 ) de courant et dans laquelle la tension ( SV1, SV2 ) d'alimentation des optocoupleurs ( OK1...OK6 ) affectés aux signaux ( 1TAS1, 2TAS1...1TAS6, 2TAS6 ) de commande associés peut être interrompue en cas d'erreur par un moyen ( U1, U2 ) pour trouver une erreur.

10. Commande ( A ) d'entraînement suivant l'une des revendications précédentes 2 à 7, dans laquelle chaque optocoupleur ( OK1...OK6 ) sert à la transmission de signaux ( ITAS1...1TAS6 ) de commande aux soupapes ( T1...T6 ) de commande et dans laquelle la tension ( SV1, SV2 ) d'alimentation des optocoupleurs ( OK1...OK6 ) affectés à la branche de pont associée respectivement peut, en cas d'erreur, être interrompue par un moyen ( U1, U2 ) pour trouver une erreur.

11. Commande ( A ) d'entraînement suivant l'une des revendications précédentes 2 à 9, comprenant un moyen pour dynamiser obligatoirement les deux trajets ( IL3, IL4 ) de blocage d'impulsion, moyen par lequel un signal ( ST ) parasite peut être appliqué à la valeur de consigne pour la production des jeux ( 1TAS1...1TAS6, 2TAS1...2TAS6 ) de signaux de commande et les tensions ( SV1, SV2 ) d'alimentation peuvent être relues pour une commande des soupapes de courant de la branche supérieure de pont ( T1, T3, T5 ) et de la branche inférieure de pont ( T2, T4, T6 ) de l'onduleur ( W ).

12. Commande ( A ) d'entraînement suivant la revendication 11, dans laquelle la relecture des tensions ( SV1, SV2 ) d'alimentation pour une commande des soupapes de courant de la branche supérieure du pont ( T1, T3, T5 ) et de la branche inférieure du pont ( T2, T4, T6 ) de l'onduleur ( W ) s'effectue en séquence.

13. Commande ( A ) d'entraînement suivant l'une des revendications précédentes, comprenant un moyen de dynamisation forcée de la limitation de la valeur de consigne, notamment de la valeur ($\dot{\phi}_S{}^*$) de consigne de fréquence du stator, par lequel un signal ( TS ) de test respectif peut dans les deux systèmes ( S1, S2 ) être appliqué à la valeur de consigne pour la production des jeux ( 1TAS1...1TAS6, 2TAS1... 2TAS6 ) de signaux de commande et des signaux ( BG1, BG2 ) de limitation produit respectivement peuvent être comparés, notamment par une comparaison croisée de données.

FIG 1

EP 1 211 774 B1

FIG 2

# FIG 3

# FIG 4